# EUROPÄISCHE PATENTANMELDUNG

(11) **EP 2 803 310 A1**
(43) Veröffentlichungstag der Anmeldung: **19.11.2014**
(21) Anmeldenummer: 13168219.7
(22) Anmeldetag: 17.05.2013
(51) Int. Cl.: A47L 7/00, A47L 9/12

(54) **Staubabsaugvorrichtung für eine Handwerkzeugmaschine**

(71) Anmelder: HILTI Aktiengesellschaft, 9494 Schaan (LI)
(72) Erfinder: Appel, Hans, 81377 München (DE); Wahle, Quirin, 80634 München (DE)
(74) Vertreter: Hilti Aktiengesellschaft Corporate Intellectual Property

(57) **Zusammenfassung**

Die erfindungsgemäße Staubabsaugvorrichtung für die Handwerkzeugmaschine hat ein Gebläse (18) zum Erzeugen eines Luftstroms (19), einen Ansaugstutzen (27) zum Ansaugen staubbeladener Luft von einem Werkzeug (4), und einen zum Sammeln von Staub vorgesehenen Sammelbehälter (22). Der Sammelbehälter (22) eine mit dem Ansaugstutzen (27) verbundene Ansaugöffnung (27) und eine mit dem Gebläse (18) verbundene Ausblasöffnung (28). Ein Filter (29) ist zum Abscheiden von Staub in den Sammelbehälter (22) die Ausblasöffnung (28) abdeckend angeordnet. Der Filter (29) hat mehrere in einer zu der Richtung (z) des Luftstroms (19) senkrechten Richtung (y) nebeneinander geschichtete Lamellen (18). Die Lamellen (18) sind zueinander geneigt. Die Neigung (42) der Lamellen (44) vermindert das Anhaften des Staubs an den Lamellen (44).

## Beschreibung

### GEBIET DER ERFINDUNG

Die vorliegende Erfindung betrifft eine Staubabsaugvorrichtung für eine Handwerkzeugmaschine.

Eine gattungsgemäße Staubabsaugvorrichtung ist beispielsweise aus der DE 102010040094 A1 bekannt. Der Staubfilter muss regelmäßig ersetzt werden, da er mit Staub verklebt.

### OFFENBARUNG DER ERFINDUNG

Die erfindungsgemäße Staubabsaugvorrichtung für die Handwerkzeugmaschine hat ein Gebläse zum Erzeugen eines Luftstroms, einen Ansaugstutzen zum Ansaugen staubbeladener Luft von einem Werkzeug, und einen zum Sammeln von Staub vorgesehenen Sammelbehälter. Der Sammelbehälter eine mit dem Ansaugstutzen verbundene Ansaugöffnung und eine mit dem Gebläse verbundene Ausblasöffnung. Ein Filter ist zum Abscheiden von Staub in den Sammelbehälter die Ausblasöffnung abdeckend angeordnet. Der Filter hat mehrere in einer zu der Richtung (z) des Luftstroms senkrechten Richtung (y) nebeneinander geschichtete Lamellen. Die Lamellen sind zueinander geneigt. Die Neigung der Lamellen vermindert das Anhaften des Staubs an den Lamellen.

Eine Ausgestaltung sieht vor, dass die äußersten Lamellen um 3 Grad bis 10 Grad zueinander geneigt sind. Die jeweils benachbarten Lamellen sollen zueinander geneigt sein. Eine Neigung von mehr als 10 Bogenminuten erscheint ausreichend. Eine größere Neigung führt neben Leistungsverlusten auch zu einem erhöhten Raumbedarf.

Eine Ausgestaltung sieht vor, dass die Lamellen in einem Rahmen befestigt sind, der in eine Richtung (z) des Luftstroms biegbar ist und der Rahmen auf einen entgegen der Richtung (z) konvex erhaben Sockel aufgesetzt ist.

Eine Ausgestaltung sieht vor, dass eine angeströmte Stirnfläche des Filters um weniger als 10 % größer als eine stromabgewandten Stirnfläche des Filters ist. Das Gebläse muss einen Druckunterschied von mehreren mBar zu dem Ansaugstutzen aufbauen. Da für die handgehaltenen Geräte nur ein kleiner Motor zum Einsatz kommen kann, sind Druckverluste unter allen Umständen zu vermeiden. Ein quaderförmiger oder nahezu quaderförmiger Aufbau ist daher zwingend.

Eine Ausgestaltung sieht vor, dass der Sockel eine zu der Richtung (z) des Luftstroms geneigte Führung aufweist, auf welcher eine der Lamellen aufgesetzt ist.

### KURZE BESCHREIBUNG DER FIGUREN

Die nachfolgende Beschreibung erläutert die Erfindung anhand von exemplarischen Ausführungsformen und Figuren. In den Figuren zeigen:
Fig. 1 einen Bohrhammer mit Staubabsaugvorrichtung
Fig. 2 einen Schnitt durch die Staubabsaugvorrichtung in Ebene II-II
Fig. 3 eine Draufsicht auf einen Filter
Fig. 4 einen Schnitt durch die Staubabsaugvorrichtung in Ebene IV-IV
Fig. 5 einen Schnitt durch eine Staubabsaugvorrichtung in Ebene II-II
Fig. 6 einen Schnitt durch eine weitere Staubabsaugvorrichtung in Ebene II-II
Fig. 7 eine Draufsicht auf den Filter der Fig. 6.

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

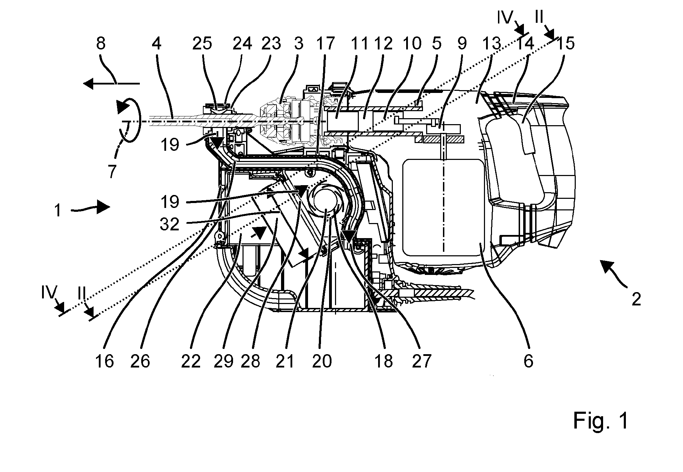

Fig. 1 zeigt eine Staubabsaugvorrichtung **1,** welche an einem Bohrhammer **2** angelegt ist. Der Bohrhammer **2** erzeugt mittels eines meißelnden Bohrers **3** Löcher in Gestein, Beton etc.. Die Staubabsaugvorrichtung **1** saugt das dabei anfallende Bohrgut, insbesondere den feinen Staub, von dem Bohrloch ab.

Der beispielhafte Bohrhammer **2** hat eine Werkzeugaufnahme **4,** in der Bohrer **3** eingesetzt und verriegelt werden kann. Die Werkzeugaufnahme **4** ist über eine Drehantrieb **5** mit einem Motor **6** gekoppelt, welcher die Werkzeugaufnahme **4** um einer Arbeitsachse **7** drehend antreibt. Ein pneumatisches Schlagwerk kann auf den Bohrer **3** Schläge längs der Arbeitsachse **7** in Arbeitsrichtung **8** ausüben. Das Schlagwerk wird ebenfalls von dem Motor **6** angetrieben. Der Motor **6** treibt ein Exzenterrad **9** an, das einen Erregerkolben **10** zu einer periodischen Vor- und Zurückbewegung zwingt. Ein Schläger **11** ist an die Bewegung des Erregerkolbens **10** durch eine Luftfeder **12** angekoppelt. Die Antriebskomponenten sind in einem Maschinengehäuse **13** angeordnet. Ein Handgriff **14** zum Halten und Führen des Bohrhammers **2** während des Betriebs kann starr oder gedämpft an das Maschinengehäuse **14** angebunden sein. Der Anwender kann den Motor **6** mittels eines Hauptschalters **15** in Betrieb nehmen.

Die Staubabsaugvorrichtung **1** hat ein Gehäuse **16** mit einer Halterung **17.** Der Anwender kann die Staubabsaugvorrichtung **1** mittels der Halterung **17** an dem Bohrhammer **2** befestigen. Die Halterung **17** beinhaltet einen beweglichen Zapfen, eine Klinke, eine Schelle, etc.

Die Staubabsaugvorrichtung **1** hat ein Gebläse **18,** welches einen Luftstrom **19** erzeugt. Das bespielhafte Gebläse **18** hat ein Lüfterrad **20** und einen das Lüfterrad **20** antreibenden Elektromotor **21.** Das Lüfterrad **20** saugt die Luft in radialer Richtung an und und bläst die Luft in axialer Richtung durch entsprechende Öffnungen in dem Gehäuse **22** aus.

Eine Ansaugdüse **23** der Staubabsaugvorrichtung **1** ist in der unmittelbaren Nähe zu dem Bohrer **3** angeordnet. Die Ansaugdüse **23** kann beispielsweise eine Hülse **24** aufweisen, welche den Bohrer **3** umschließt. Die beispielhafte Hülse **24** hat einen Dichtring **25,** welcher an dem Bohrer **3** zum Anliegen kommt. Bei dem speziellen dargestellten Bohrer **3** wird das Bohrmehl innerhalb des Schafts des Bohrers **3** angesaugt. Bei herkömmlichen Bohrern mit einer Transportwendel umschließt die Ansaugdüse **23** vorzugsweise ebenfalls den Bohrer und liegt zugleich an dem Werkstück an.

Die von der Ansaugdüse **23** aufgenommene staubbeladene Luft wird von dem Luftstrom **19** in einen Sammelbehälter **22** transportiert. Die Ansaugdüse **23** ist über einen Schlauch **26,** ein starres Rohr, ein teleskopierbares Rohr oder einen anderen rohrförmigen Kanal mit einer Ansaugöffnung **27** des Sammelbehälters **22** verbunden. Der Sammelbehälter **22** hat eine ebene Ausblasöffnung **28,** welche vollständig von einem Filter **29** abdeckt ist. Hinter dem Filter **29** ist das Gebläse **18** angeordnet. Der Staub in dem Luftstrom **19** wird an dem Filter **29** abgeschieden und bleibt in dem Sammelbehälter **22** zurück. Der das Gebläse **18** erreichende Luftstrom **19** ist staubfrei. Das Gehäuse **30** des Sammelbehälters **22** ist der Weise luftdicht gestaltet, dass der gesamte an der Ansaugöffnung **27** eintretende Luftstrom **19** nur durch die Ausblasöffnung **28** austritt.

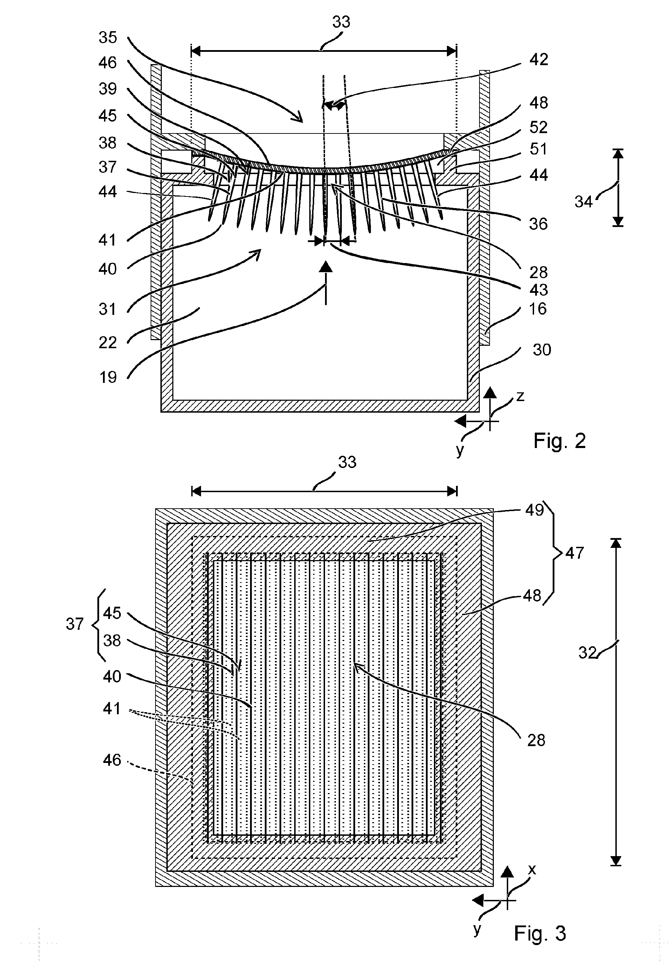

Fig. 2 zeigt den beispielhaften eingebauten Filter **29** in einem Querschnitt in der Ebene II-II. Fig. 3 zeigt eine Draufsicht auf die angeströmte Stirnfläche **31** des Filters **29.** Der Filter **29** hat einen im wesentlichen quaderförmigen Aufbau. Die Abmessungen des Quaders werden nachfolgend wie üblich als Länge **32,** Breite **33** und Höhe **34** bezeichnet, die zugehörigen Achsen werden als x-Achse, y-Achse und z-Achse bezeichnet. Eine angeströmte Stirnfläche **31,** an welcher der Staub anfällt, und eine stromabgewandte Stirnfläche **35,** welche im wesentlichen sauber bleibt, sind senkrecht zu der z-Achse und weitgehend gleich groß. Die Stirnflächen **31, 35** sind gleich dem Produkt von Länge **32** und Breite **33** des Filters **29.** Die Abweichung ist geringer als 10 %. Die gleichen Abmessungen vermeiden einen Druckabfall.

Der Filter **29** hat eine Membran **36,** deren durchströmte Oberfläche um ein Vielfaches größer als die Stirnflächen **31, 35** ist. Die Membran **36** ist aus einer Vielzahl von Lamellen **37** vorzugsweise gleicher Gestalt zusammengesetzt. Die Lamellen **37** bestehen im Wesentlichen aus zwei gegenüberliegenden flächigen Seiten **38.** Die Seiten **38** sind aus der permeablen Membran **36,** welche eine zum Zurückhalten des Staubs ausgelegte Porengröße aufweist. Die Seiten **38** sind voneinander durch einen dünnen flächig ausgebildeten Kanal **39** separiert. Staubbeladene Luft kann die Seiten **38** unter Abscheiden des Staubs durchdringen und in dem Kanal **39** zwischen den Seiten **38** abfließen. Die Seiten **38** sind vorzugsweise gleichgroß. Die Seiten **38** sind vorzugsweise zueinander parallel oder unter einem geringen Winkel, kleiner 5 Grad zueinander geneigt. Die Seiten **38** sind an einer Kopflinie **40** miteinander verbunden. Benachbarte Lamellen **37** sind mit je einer Fußlinie **41** der Seiten **38** untereinander verbunden.

Die Lamellen **37** sind zueinander parallel zu der x-Achse ausgerichtet, d.h. die Seiten **38,** Kopflinien **40** und Fußlinien **41** sind zueinander parallel. Die Lamellen **37** folgen in y-Richtung aufeinander, vorzugsweise ohne in dieser Richtung partiell zu überlappen. Die Lamellen **37** sind gegenüber der z-Achse unter einem geringen Winkel geneigt, worauf nachfolgend weiter eingegangen wird. Die Lamellen **37** zeigen mit ihren Kopflinien **40** gegen den Luftstrom **19.**

Die Lamellen **37** sind gefächert ausgerichtet. Die Lamellen **37** sind zueinander geneigt. Die Neigung **42** zwischen den Lamellen **37** wird zwischen den Schwerebenen derer Seiten **38** bestimmt oder gleichwertig wird die Neigung **42** zwischen den jeweils in die gleiche Richtung weisenden Seiten **38** bestimmt. Ein Abstand **43** zwischen benachbarten Lamellen **37** verringert sich in Richtung des Luftstroms **19.** Die Neigung **42** ist zwischen allen benachbarten Lamellen **37** ungleich Null, vorzugsweise gleich groß. Die beiden längs der y-Achse äußersten Lamellen **44** haben eine relative Neigung **42** im Bereich zwischen 3 Grad und 10 Grad. Die Anströmung erfolgt somit weiterhin im Wesentlichen aus einer axialen Richtung.

Die Membran **36** ist beispielsweise aus einem Bogen aus gefalteten Papier oder einer gefalteten Textilie gebildet. Die Poren der Membran **36** können zweckmäßigerweise im Mittel kleiner als 5 µm zum Zurückhalten von Staub sein. Der Bogen ist mehrfach in abwechselnd gegenläufiger Falzrichtung längs zu der x-Achse paralleler Falzlinien gefaltet. Die erste Seitenfläche **38** der Lamelle ergibt sich als Faltung in die Falzrichtung und die zweite Seite **45** als darauffolgende Faltung in die entgegengesetzte Richtung. Die beiden Seiten **38, 45** sind entlang einer Falzlinie verbunden, welche die Kopflinie **40** bildet, ebenso sind die benachbarten Lamellen **37** entlang einer Falzlinie verbunden, welche die Fußlinie **41** bildet. Der Abstand der Seiten **38** einer Lamelle **37** ist geringer als der Abstand zweier benachbarter Lamellen **37.**

Der Filter **29** hat einen Rahmen **46.** Der Rahmen **46** verbindet die Fußlinien **41** entlang der y-Achse. Die Membran **36** kann sich nicht mehr entfalten. Die Höhe des Rahmens **46** ist vorzugsweise deutlich geringer als die Höhe **34** der gefalteten Membran **36.** Die stromzugewandten Kanten **40** sind nicht in dem Rahmen **46** fixiert, sondern beweglich. Der bevorzugte Rahmen **46** ist aus einem elastischen Kunststoff, z.B. Gummi.

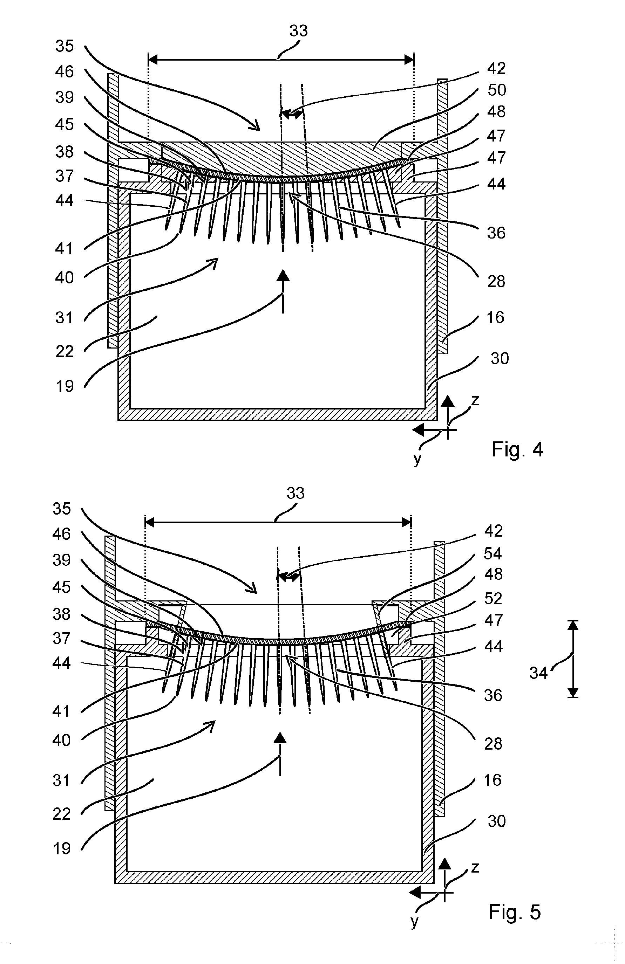

Die Ausblasöffnung **28** des Sammelbehälters **22** ist von dem Filter **29** abgedeckt. Die Ausblasöffnung **28** hat einen rahmenförmigen Sockel **47,** der die Ausblasöffnung **28** umgibt. Der Rahmen **46** des Filters **29** liegt formschlüssig an dem Sockel **47,** um eine Leckage zu vermeiden. Der rahmenförmige Sockel **47** hat erste Bereiche **48,** welche längs der x-Achse also längs den Kanten **40, 41** der Lamellen **44** verlaufen, und zweite Bereiche **49,** welche längs der y-Achse verlaufen, also im Wesentlichen senkrecht zu den Lamellen **44.** Die ersten Bereiche **48** sind im Wesentlichen geradlinig und in einer Ebene liegend ausgebildet. Die zweiten Bereiche **49** sind längs der y-Achse konkav gewölbt. Der zweite Bereich **49** ist in der Mitte näher an dem Innenraum des Sammelbehälters **22** als am Rand. (Fig. 4). Der an den Sockel **47** angedrückte, nachgiebige Rahmen **46** des Filters **29** wird entsprechend verformt. Die stromabgewandten Kanten **41** liegen somit in unterschiedlicher Höhe längs der z-Achse. Die gefaltete Membran **36** spreizt fächerförmig auf; die Lamellen **37** erhalten die relative Neigung **42** zueinander.

Das Gehäuse **16** der Staubabsaugvorrichtung **1** hat einen Sockel **50,** der dem Sockel **47** des Sammelbehälters **22** gegenüberliegt. Der Rahmen **46** des Filters **29** ist zwischen den beiden Sockeln **47, 50** eingespannt. Der Sockel **50** des Gehäuses **22** weist einen konvexen Abschnitt längs der y-Achse auf, der vorzugsweise zu dem zweiten Bereich **49** des Sockels **47** des Sammelbehälters **22** komplementär ist. In einer Ausgestaltung ist nur das Gehäuse **22** mit einem konvex gewölbten Sockel **50** versehen.

Fig.5 zeigt eine weitere Ausgestaltung. Das Gehäuse **22** ist mit Führungsplatten **51** versehen. Die Führungsplatten **51** sind gegenüber der z-Achse geneigt, gleich der Neigung **42** der äußersten oder äußeren Lamellen **44.** Die äußeren Lamellen **44** sind mit dem Kanal **39** auf die Führungsplatten **51** aufgesetzt. Die Führungsplatten **51** bewirken oder unterstützten das fächerartige Aufspreizen der Membran **36** aus den Lamellen **37.** Eine Führung an der stromabgewandten Seite erweist sich als vorteilhaft, da die Führung **51** keinen Keimpunkt für die Ansammlung von Staub bietet.

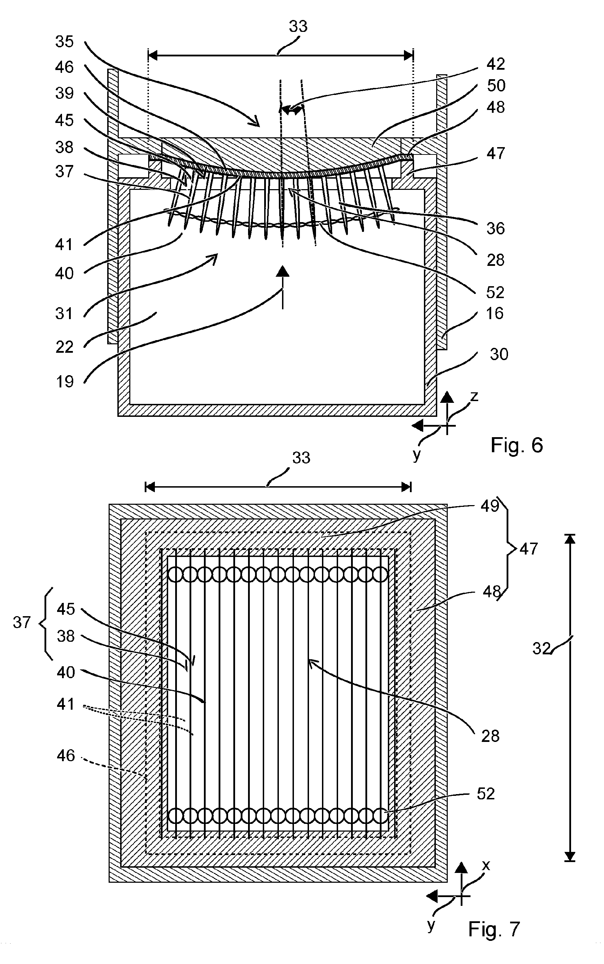

Fig. 6 und Fig. 7 zeigen eine weitere Ausgestaltung. Die Lamellen **37** sind mit Abstandshaltern **52** versehen. Die Abstandshalter **52** sind an der Kopflinie **40** angeordnet. Die Abstandshalter **52** haben eine Abmessung längs der y-Achse, welche größer als der Abstand der Fußlinie **41** ist. Hierdurch stehen die Kopflinien **40** weiter auseinander als die Fußlinien **41,** um die gewünschte fächerartige Spreizung zu erreichen. Die Abstandshalter **52** können als Aufsatz auf die Kopflinien **40** aufgesetzt werden. Vorzugsweise werden die Abstandshalter **52** in die Membran **36** geprägt, bevor die Membran **36** zu den Lamellen **37** gefaltet wird.

## Patentansprüche

1. Staubabsaugvorrichtung (1) für eine Handwerkzeugmaschine (2), mit einem Gebläse (18) zum Erzeugen eines Luftstroms (19),
einem Ansaugstutzen (27) zum Ansaugen staubbeladener Luft von einem Werkzeug (4), einem zum Sammeln von Staub vorgesehenen Sammelbehälter (22), der eine mit dem Ansaugstutzen (27) verbundene Ansaugöffnung (27) und eine mit dem Gebläse (18) verbundene Ausblasöffnung (28) aufweist,
einem Filter (29), der zum Abscheiden von Staub in den Sammelbehälter (22) die Ausblasöffnung (28) abdeckend angeordnet ist, wobei der Filter (29) mehrere in einer zu der Richtung (z) des Luftstroms (19) senkrechten Richtung (y) nebeneinander geschichtete Lamellen (18) aufweist, **dadurch gekennzeichnet, dass** die Lamellen (18) zueinander geneigt sind.

2. Staubabsaugvorrichtung (1) nach Anspruch 1, **dadurch gekennzeichnet, dass** die äußersten Lamellen (37) um 3 Grad bis 10 Grad zueinander geneigt sind.

3. Staubabsaugvorrichtung (1) nach Anspruch 1 oder 2, **dadurch gekennzeichnet, dass** die Lamellen (37) in einem Rahmen (46) befestigt sind, der in eine Richtung (z) des Luftstroms (19) biegbar ist und der Rahmen (46) auf einen entgegen der Richtung (z) konvex erhaben Sockel (50) aufgesetzt ist.

4. Staubabsaugvorrichtung (1) nach einem der vorhergehenden Ansprüche, **dadurch gekennzeichnet, dass** eine angeströmte Stirnfläche (31) des Filters (29) um weniger als 10 % größer als eine stromabgewandten Stirnfläche (35) des Filters (29) ist.

5. Staubabsaugvorrichtung (1) nach einem der vorhergehenden Ansprüche, **dadurch gekennzeichnet, dass** der Sockel (50) eine zu der Richtung (z) des Luftstroms (19) geneigte Führung (51) aufweist, auf welcher eine der Lamellen (44) aufgesetzt ist.

6. Staubabsaugvorrichtung (1) nach einem der vorhergehenden Ansprüche, **dadurch gekennzeichnet, dass** zwischen benachbarten Lamellen (37) Abstandhalter (52) angeordnet sind, welche die Lamellen (37) aufspreizen.
